Europäisches Patentamt

**European Patent Office**

**Office européen des brevets**

(19)

(11) Numéro de publication : **0 027 751
B1**

(12) # FASCICULE DE BREVET EUROPÉEN

(45) Date de publication du fascicule du brevet :
15.12.82

(21) Numéro de dépôt : **80401363.9**

(22) Date de dépôt : **25.09.80**

(51) Int. Cl.³ : **B 60 K   5/12, F 16 F   9/10**

(54) Cale élastique, notamment pour la suspension d'un moteur de véhicule.

(30) Priorité : **22.10.79 FR 7926137**

(43) Date de publication de la demande :
**29.04.81 (Bulletin 81/17)**

(45) Mention de la délivrance du brevet :
**15.12.82 Bulletin 82/50**

(84) Etats contractants désignés :
**DE GB IT**

(56) Documents cités :
**FR A 926 846
FR A 1 380 784
FR A 1 540 380
FR A 1 549 300
FR A 2 349 066
FR A 2 356 847
GB A 2 041 485
GB A 2 041 486
US A 3 651 902**

(73) Titulaire : **AUTOMOBILES PEUGEOT
75, avenue de la Grande Armée
F-75116 Paris (FR)**

**SOCIETE ANONYME AUTOMOBILES CITROEN
117 à 167, Quai André Citroen
F-75747 Paris Cedex 15 (FR)**

(72) Inventeur : **Le Saiver, Robert
Rue des Coteaux
F-78570 Chanteloup Les Vignes (FR)**
Inventeur : **Poupard, Dominique
8 Route du Pavé des Gardes
F-92370 Chaville (FR)**

(74) Mandataire : **Lavoix, Jean et al
c/o Cabinet Lavoix 2, Place D'Estienne D'Orves
F-75441 Paris Cedex 09 (FR)**

## Cale élastique, notamment pour la suspension d'un moteur de véhicule

L'invention concerne une cale élastique destinée à relier à un support rigide un organe ou un ensemble sur lequel s'exercent des excitations de différentes natures. A titre d'exemple d'application, ces cales sont plus particulièrement adaptées à la suspension d'un moteur thermique par rapport à la structure d'un véhicule automobile.

On sait que sur un véhicule automobile les cales élastiques utilisées pour la suspension du moteur ont pour rôle principal de filtrer les vibrations dues aux imperfections d'équilibrage du moteur. A ce titre, elles doivent présenter une grande souplesse. Malheureusement, cette grande souplesse conduit à une détérioration importante du confort sous l'effet des trépidations à basse fréquence provenant de la route et transmises à la structure, du fait d'un amortissement insuffisant.

Pour remédier à cet inconvénient, on a déjà proposé dans le brevet FR-A-2 356 847 de réaliser des cales élastiques comprenant deux chambres remplies de liquide et séparées par une paroi munie d'un orifice calibré et montée libre de se déplacer entre deux sièges sur une distance prédéterminée suivant une direction perpendiculaire à son plan moyen.

Une cale ainsi constituée présente une raideur très faible pour les vibrations de fréquence élevée (> 30 Hz) et de faible amplitude, grâce aux mouvements de la paroi mobile. Elle présente une raideur accrue et un bon amortissement pour des fréquences plus faibles (5 à 15 Hz) et une plus grande amplitude des mouvements (> 0,5 mm), du fait du laminage du liquide à travers l'orifice calibré ménagé dans la paroi mobile.

Une telle cale présente cependant l'inconvénient d'une réalisation délicate, du fait de la grande précision nécessaire dans le jeu très faible à laisser entre la paroi mobile et ses deux sièges.

On connaît également des cales élastiques comprenant deux chambres remplies de liquide et reliées par au moins un canal de grande longueur et de faible section, de façon que la fréquence de résonance de la masse liquide en mouvement dans le ou les canaux coïncide sensiblement avec la fréquence de résonancce du moteur sur sa suspension. On obtient ainsi une cale à colonne de liquide procurant un très fort amortissement dans la zone des fréquences correspondant à la fréquence de résonance du moteur sur sa suspension et un assez bon filtrage des vibrations à fréquence élevée et faible amplitude. Cependant, ce filtrage est moins bon qu'avec la cale précédente à paroi mobile.

L'invention a pour but de réaliser une cale élastique assurant à la fois un aussi bon filtrage que la cale à paroi mobile, pour les hautes fréquences et faibles amplitudes et un aussi bon amortissement que la cale à colonne de liquide, pour les basses fréquences et fortes amplitudes, tout en étant particulièrement facile à mettre en œuvre dans une fabrication en grande série.

Elle s'applique donc à une cale élastique comprenant deux chambres remplies de liquide, délimitées au moins en partie par des parois élastiques et séparées par une cloison rigide ménageant deux sièges entre lesquels peut se déplacer une paroi mobile suivant une direction perpendiculaire à son plan moyen.

Cette cale est caractérisée en ce que ladite cloison rigide délimite un conduit de longueur environ 20 à 50 fois supérieure à son diamètre et reliant les deux chambres entre elles.

Suivant une autre caractéristique la cloison rigide est réalisée en deux éléments accolés suivant un plan de joint à peu près parallèle et/ou confondu avec le plan moyen de la paroi mobile et délimitant dans leurs faces en regard des canaux complémentaires reliés chacun par un passage à la face opposée de l'élément de ces canaux et passages délimitant le conduit précité.

Un exemple de réalisation de l'invention fait l'objet de la description qui suit, en référence aux dessins joints dans lesquels :

la Figure 1 est une coupe axiale d'une cale ;

la Figure 2 est une vue d'un élément de cloison rigide, suivant la ligne 2-2 de la Fig. 1.

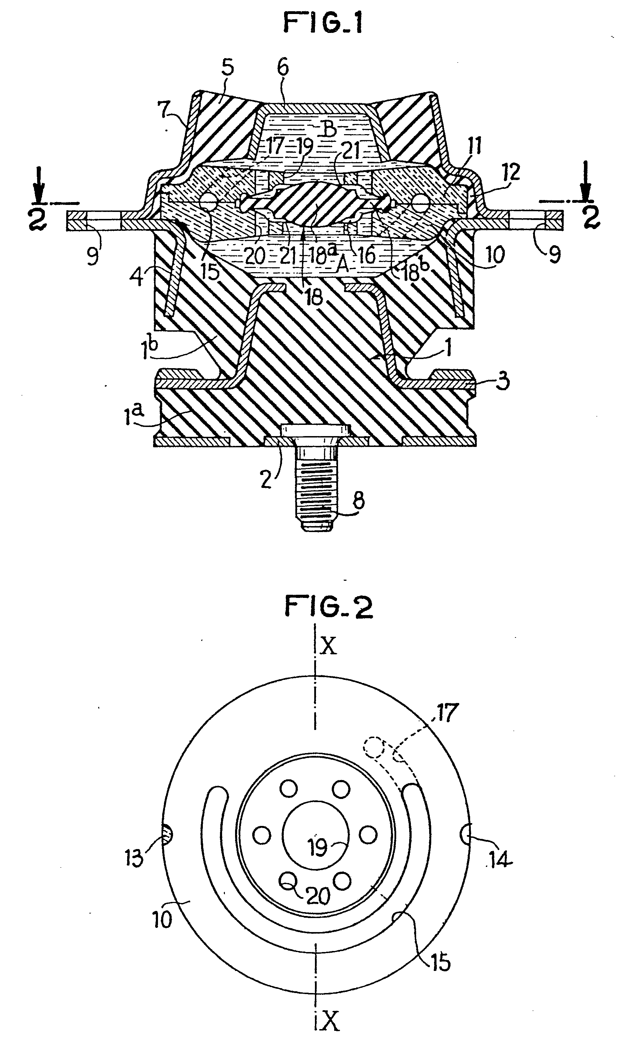

La cale représentée à la Fig. 1 comprend notamment, d'une part, un bloc en élastomère 1 adhérisé sur trois armatures 2, 3, 4 et d'autre part, un bloc en élastomère 5 adhérisé sur deux armatures 6, 7. Le bloc 1 comporte en fait deux parties principales 1a, 1b disposées, respectivement entre les armatures 2, 3 et les armatures 3, 4.

L'armature 2 est destinée à être fixée à la structure d'un véhicule automobile au moyen d'une vis 8, tandis que les armatures 4 et 7, fixées l'une sur l'autre, par exemple par sertissage sont destinées à être reliées au niveau d'orifices de fixation 9, au moteur non représenté, du véhicule.

Entre les armatures 4 et 7, deux disques rigides circulaires 10, 11 sont pincés l'un contre l'autre par leur périphérie. Une couche d'élastomère 12 adhérisée sur l'armature 7 en même temps que le bloc 5 permet s'assurer un bon serrage des disques 10, 11 sans exiger de précision dimensionnelle particulière.

Les deux disques 10, 11 sont identiques entre eux et disposés symétriquement par rapport à un diamètre X-X (Fig. 2), chaque disque possédant un téton 13 coopérant avec un alvéole 14 de l'autre disque pour assurer leur positionnement relatif correct.

Le disque 10 délimite avec le bloc en élastomère 1 une première chambre A, tandis que le disque 11 délimite avec le bloc en élastomère 5 et l'armature 6 une deuxième chambre B.

Sur les faces des disques 10 et 11 destinées à s'appliquer l'une contre l'autre et constituant un plan de joint, sont formés un canal 15 et une cavité centrale 16. Chaque canal 15 s'étend sur une portion de circonférence d'angle au centre de préférence supérieur à 180° et se raccorde sans coude brusque sur un passage 17 de communication avec la face opposée du disque.

Les canaux 15 des deux disques se faisant vis-à-vis délimitent avec les passages 17 un conduit de grande longueur et faible section par lequel les chambres A et B communiquent directement entre elles. Le tracé du conduit permet de lui donner une longueur 20 à 50 fois plus grande que son diamètre.

Entre les disques 10 et 11, dans les cavités 16, est serrée une paroi mobile 18 comprenant une partie centrale 18a massive pratiquement indéformable et une partie périphérique 18b mince et plus souple par laquelle la paroi 18 est maintenue. Cette partie périphérique mince autorise un déplacement de la partie centrale massive suivant une direction perpendiculaire à son plan moyen tout en assurant son rappel en position intermédiaire. Ce plan moyen est contenu dans le plan de joint des deux disques 10, 11.

Dans chaque disque 10, 11 sont également ménagés un orifice central 19, de forte section qui débouche au centre de la cavité 16 et des orifices 20, de faible section, qui débouchent vers la périphérie de la cavité 16. La bordure interne de la cavité 16, voisine de l'orifice central 19, constitue un siège 21 sur lequel peut s'appliquer la partie massive de la paroi mobile 18.

Les chambres A et B sont remplies de liquide par un procédé connu, par exemple en faisant le sertissage des armatures 4 et 7 en état d'immersion.

La cale qui vient d'être décrite fonctionne de la façon suivante :

Pour des faibles amplitudes de vibration (± 0,1 mm) la paroi mobile 18 est libre de se déplacer entre ses sièges 21 par déformation de sa partie périphérique souple. La cale possède alors une très faible raideur ce qui permet d'assurer un excellent filtrage des vibrations à haute fréquence engendrées et émises par le moteur.

Les orifices 20 servent à l'évacuation du liquide entre la paroi mobile 18 et les disques 10, 11 de manière à ne pas contrarier les déplacements de la paroi mobile à haute fréquence.

Aux fortes amplitudes (> ± 0,3 mm) et à basse fréquence (5 à 15 Hz), la mise en appui de la paroi mobile 18 sur ses sièges oblige le liquide à passer par le conduit 15, 17 ce qui produit une augmentation importante de la raideur et de l'amortissement, favorables à la diminution des trépidations dues à l'état de la route. L'amortissement est maximal à la fréquence pour laquelle la masse de liquide contenue dans le conduit 15, 17 entre en résonance. Cette valeur peut être considérablement plus élevée que celle obtenue par laminage de liquide à travers un orifice calibré, toutes choses égales par ailleurs.

En plus de ces avantages, le phénomène d'amplification des mouvements du liquide au voisinage de la fréquence de résonance amplifie les mouvements de la paroi mobile ce qui permet d'augmenter le jeu entre celle-ci et ses sièges, pour une valeur égale de l'amplitude de vibration des armatures à partir de laquelle la paroi mobile vient en appui sur ses sièges. On peut alors admettre des tolérances de fabrication plus larges, ce qui facilite très nettement la production en grande série.

Par conséquent, conformément au but recherché, une telle cale offre toute une série d'avantages qui paraissaient incompatibles dans les agencements antérieurs, tout en étant de plus d'une fabrication plus aisée.

**Revendications**

1. Cale élastique comprenant deux chambres (A, B) remplies de liquide délimitées, au moins en partie, par des parois élastiques, et séparées par une cloison rigide (10, 11) ménageant deux sièges (21) entre lesquels peut se déplacer une paroi mobile (18) suivant une direction perpendiculaire à son plan moyen, caractérisée en ce que ladite cloison rigide (10, 11) délimite un conduit (15, 17) de longueur environ 20 à 50 fois supérieure à son diamètre et reliant les deux chambres (A, B) entre elles.

2. Cale élastique suivant la revendication 1, caractérisée en ce que la cloison rigide est réalisée en deux éléments (10, 11) accolés suivant un plan de joint à peu près parallèle et/ou confondu avec le plan moyen de la paroi mobile (18) et délimitant dans leurs faces en regard des canaux complémentaires (15) reliés chacun par un passage (17) à la face opposée de l'élément, ces canaux (15) et passages (17) délimitant le conduit précité.

3. Cale élastique suivant les revendications 1 ou 2, caractérisée en ce que la cloison rigide (10, 11) comporte une cavité centrale (16), qui communique avec chacune des chambres adjacentes (A, B), par un orifice central (19) de forte section et par des orifices périphériques (20) de faible section.

4. Cale élastique suivant la revendication 3, caractérisée en ce que les deux éléments (10, 11) constituant la cloison rigide sont identiques entre eux et comportent des moyens complémentaires de centrage (13, 14).

5. Cale élastique suivant la revendication 3, caractérisée en ce que la paroi mobile (18) comprend une partie centrale massive (18a) pratiquement indéformable et une partie périphérique (18b) mince et plus souple qui autorise un déplacement de la partie centrale massive suivant une direction perpendiculaire à son plan moyen tout en assurant son rappel en position intermédiaire.

6. Cale élastique suivant la revendication 5, caractérisée en ce que la paroi mobile (18) est serrée à sa périphérie entre les deux éléments (10, 11) constituant la cloison fixe.

7. Cale élastique suivant les revendications 1 à 6, caractérisée en ce que la cloison rigide (10, 11) est pincée entre deux armatures rigides (4, 7), une couche d'élastomère (12) étant interposée entre cette cloison et au moins une de ces armatures.

**Claims**

1. An elastically yieldable unit comprising two chambers (A, B) filled with a liquid, defined at least partly by elastically yieldable walls and separated by a rigid partition wall (10, 11) defining two seats (21) between which seats a movable wall (18) is movable in a direction perpendicular to its mean plane, characterized in that said movable wall (10, 11) defines a conduit (15, 17) having a length which is about 20 to 50 times the diameter of the conduit and interconnecting the two chambers (A, B).

2. An elastically yieldable unit as claimed in claim 1, characterized in that the rigid wall is formed by two members (10, 11) which are united on a joint plane which is substantially parallel to and/or coincident with the mean plane of the movable wall (18) and define in their confronting sides complementary grooves (15) each of which is connected to the opposite side of the corresponding member by a passageway (17), said grooves (15) and passageways (17) defining said conduit.

3. An elastically yieldable unit as claimed in claim 1 or 2, characterized in that the rigid wall (10, 11) has a centre cavity (16) which communicates with each of the adjacent chambers (A, B) by way of a centre orifice (19) of large section and by way of peripheral orifices (20) of small section.

4. An elastically yieldable unit as claimed in claim 3, characterized in that the two members (10, 11) constituting the rigid wall are identical to each other and comprise complementary centering means (13, 14).

5. An elastically yieldable unit as claimed in claim 3, characterized in that the movable wall (18) comprises a substantially undeformable massive centre portion (18a), and a thin more flexible peripheral portion (18b) which peripheral portion allows the massive centre portion to move in a direction perpendicular to the mean plane thereof while it ensures that the massive centre portion returns to an intermediate position thereof.

6. An elastically yieldable unit as claimed in claims 6, characterized in that the movable wall (18) is clamped adjacent the periphery thereof between the two members (10, 11) constituting the fixed wall.

7. An elastically yieldable unit as claimed in claims 1 to 6, characterized in that the rigid partition wall (10, 11) is clamped between two rigid members (4, 7), a layer (12) of an elastomer being interposed between said partition wall and at least one of said rigid members.

## Ansprüche

1. Elastisches Lager mit zwei flüssigkeitsgefüllten Kammern (A, B), die wenigstens teilweise durch elastische Wände begrenzt und durch eine starre Trennwand (10, 11) getrennt sind, die zwei Sitze bildet, zwischen denen sich eine bewegliche Wand (18) senkrecht zu ihrer Mittelebene bewegen kann, dadurch gekennzeichnet, dass die starre Trennwand (10, 11) eine Leitung (15, 17) bildet, deren Länge etwa 20 bis 50 mal grösser als ihr Durchmesser ist und die die beiden Kammern (A, B) miteinander verbindet.

2. Elastisches Lager nach Anspruch 1, dadurch gekennzeichnet, dass die starre Trennwand aus zwei Elementen (10, 11) hergestellt ist, die längs einer zur Mittelebene der beweglichen Wand (18) etwa parallelen und/oder mit ihr zusammenfallenden Trennfugenebene zusammengebaut sind und in ihren einander zugewandten Flächen komplementäre Kanäle (15) bilden, die jeweils über einen Durchtritt (17) mit der gegenüberliegenden Seite des Elements verbunden sind, wobei die Kanäle (15) und die Durchtritte (17) die genannte Leitung bilden.

3. Elastisches Lager nach Anspruch 1 oder 2, dadurch gekennzeichnet, dass die starre Trennwand (10, 11) einen zentralen Hohlraum (16) aufweist, der über eine zentrale Öffnung (19) mit grossem Querschnitt und über Umfangsöffnungen (20) mit kleinem Querschnitt mit jeder der angrenzenden Kammern (A, B) in Verbindung steht.

4. Elastisches Lager nach Anspruch 1, dadurch gekennzeichnet, dass die die starre Trennwand bildenden beiden Elemente (10, 11) identisch sind und komplementäre Zentriereinrichtungen (13, 14) aufweisen.

5. Elastisches Lager nach Anspruch 3, dadurch gekennzeichnet, dass die bewegliche Wand (18) ein praktisch unverformbares massives Mittelteil (18a) und ein dünnes sowie biegsames Umfangsteil (18b) aufweist, das eine Verschiebung des massiven Mittelteils senkrecht zu seiner Mittelebene gestattet bei Gewährleistung seiner Rückstellung in die Zwischenstellung.

6. Elastisches Lager nach Anspruch 5, dadurch gekennzeichnet, dass die bewegliche Wand (18) an ihrem Umfang zwischen den beiden die feststehende Zwischenwand bildenden Elemente (10, 11) eingespannt ist.

7. Elastisches Lager nach Anspruch 1 bis 6, dadurch gekennzeichnet, dass die starre Zwischenwand (10, 11) zwischen zwei starren Verstärkungsteilen (4, 7) eingeklemmt ist, wobei zwischen der Trennwand und wenigstens einem der Verstärkungsteile eine elastomere Schicht (12) angeordnet ist.

0 027 751

FIG.1

FIG.2